## Europäisches Patentamt

## European Patent Office

## Office européen des brevets

(19)

(11) Veröffentlichungsnummer: **0 010 265**
**B1**

(12) **EUROPÄISCHE PATENTSCHRIFT**

(45) Veröffentlichungstag der Patentschrift:
**14.04.82**

(21) Anmeldenummer: **79103929.0**

(22) Anmeldetag: **12.10.79**

(51) Int. Cl.³: **C 08 F 220/12,** C 08 F 212/04,
B 01 J 47/00 // (C08F220/12,
220/04, 220/20, 212/36, 236/20,
216/12, 212/08),(C08F212/04,
220/12, 220/20, 212/36, 236/20,
216/12, 212/08)

(54) **Kunstharze auf Basis vernetzter Mischpolymerisate aus Mono- und Polyvinylverbindungen, Verfahren zu ihrer Herstellung und ihre Verwendung als Inertmaterial in Ionenaustauscher-Mischbettfiltern.**

(30) Priorität: **24.10.78 DE 2846187**

(43) Veröffentlichungstag der Anmeldung:
**30.04.80 Patentblatt 80/9**

(45) Bekanntmachung des Hinweises auf die Patenterteilung:
**14.04.82 Patentblatt 82/15**

(84) Benannte Vertragsstaaten:
**DE FR GB IT NL**

(56) Entgegenhaltungen:
**FR-A-1 303 785**
**US-A-2 910 456**
**US-A-3 218 299**

(73) Patentinhaber: **BAYER AG, Zentralbereich Patente,
Marken und Lizenzen, D-5090 Leverkusen 1, Bayerwerk
(DE)**

(72) Erfinder: **Strüver, Werner, Dr., An der Ruthen 5,
D-5000 Köln 80 (DE)**
Erfinder: **Heller, Harold, Dr., Hahnenweg 4,
D-5000 Köln 80 (DE)**
Erfinder: **Lange, Peter Michael, Dr.,
Walter-Flex-Strasse 9, D-5090 Leverkusen 1 (DE)**

ACTORUM AG.

## Kunstharze auf Basis vernetzter Mischpolymerisate aus Mono- und Polyvinylverbindungen, Verfahren zu ihrer Herstellung und ihre Verwendung als Inertmaterial in Ionenaustauscher-Mischbettfiltern

Die Erfindung betrifft neue Kunstharze auf Basis vernetzter Mischpolymerisate aus Mono- und Polyvinylverbindungen, ein Verfahren zu ihrer Herstellung und die Verwendung der Kunstharze als Inertmaterial für Trennschichten in Ionenaustauscher-Mischbettfiltern.

Die Verwendung von Kunstharzen als Inertmaterial für Trennschichten in Ionenaustauscher-Mischbettfiltern ist bekannt. So werden z.B. gemäss US-PS 2 666 741 handelsübliche Polystyrole verwendet, die eine solche Dichte und eine solche Teilchengrösse aufweisen, dass sie sich bei der Trennung von Kationen- und Anionenaustauschern zwischen beide Ionenaustauschertypen schieben. In der DE-PS 971 771 werden als Trennmaterialien allgemein Perl(co-)polymerisate von Styrol, Vinylchlorid, Methacrylsäureester, Divinylbenzol und Acrylnitril genannt. In der FR-PS 2 314 896 werden als Trennmaterialien Acrylnitril-Butadien-Styrol-Harze, Epoxid-Harze, Polyamid-Harze und Polystyrol-Harze angegeben.

Diese bislang als Trennmaterialien in Ionenaustauscher-Mischbettfiltern verwendeten Kunstharze weisen jedoch schwerwiegende Nachteile auf. So haben z.B. die Polystyrol-Kunstharze eine zu geringe Dichte. Infolge der zu geringen Dichte müssen die Kunstharzpartikel eine für die Betriebspraxis ungeeignete Grösse erhalten.

Ein schwerwiegender Nachteil aller bislang als Trennmaterialien verwendeten Kunstharze ist, dass sie bei der angegebenen Verwendung fortlaufend lösliche Bestandteile (vor allem nicht vernetzte, lösliche Monomere und Oligomere) an das Wasser bzw. die Regenerierchemikalien abgeben. Dieser als «Bluten» bezeichnete Vorgang setzt den Reinheitsgrad des aus dem Mischbettfilter ablaufenden Wassers erheblich herab. Das «Bluten» macht sich am ständigen chemischen Sauerstoffbedarf (CSB) des aus dem Mischbettfilter ablaufenden Wassers bemerkbar. Dieses «Bluten» der Harze ist insbesondere bei Trennharzen auf Basis von Vinylchlorid und Acrylnitril kritisch, wegen der hohen Toxizität dieser Monomeren. Manche Kunstharze lassen sich zwar durch eine besondere Behandlung von den löslichen, nicht umgesetzten Monomeren befreien, das Entfernen der löslichen Oligomeren aus den Kunstharzen ist in der Praxis aber — zumindest in dem erforderlichen Masse — nicht möglich.

Ein weiterer schwerwiegender Nachteil der bekannten als Trennmaterialien verwendeten Kunstharze auf Basis Acrylsäureester und Acrylnitril ist deren unzureichende Hydrolysebeständigkeit. Unter den Bedingungen der Heissregeneration des Mischbettfilters, d.h. bei der Einwirkung verdünnter Säuren oder Alkalien bei Temperaturen bis zu 80°C hydrolysieren diese Harze. Die bei der Hydrolyse entstehenden Carboxylgruppen bewirken einen Natrium-Schlupf und verlängerte Auswaschzeiten des Mischbettfilters. Durch die Hydrolyse erfolgt ausserdem ein verstärktes in Lösung gehen der hydrophilierten Monomere und Oligomere. Durch die Hydrolyseinstabilität der Trennharze wird das Mischbettfilter schliesslich unbrauchbar.

Es wurden nun neue Kunstharze auf Basis vernetzter Mischpolymerisate aus Mono- und Polyvinylverbindungen gefunden, die die für die bekannten Kunstharze aufgezeigten Nachteile — ungünstige Dichte, Abgabe löslicher Bestandteile und unzureichende Hydrolysebeständigkeit — nicht aufweisen und die sich deshalb ausgezeichnet als Inertmaterial für Trennschichten in Ionenaustauscher-Mischbettfiltern eignen. Diese neuen Kunstharze werden durch Mischpolymerisation von (a) Styrolen, deren Benzolkern durch $C_1$-$C_4$-Alkylgruppen, Halogenatome und/oder Nitrogruppen und/oder deren Seitenkette durch $C_1$-$C_4$-Alkylgruppen substituiert ist; und/oder Methacrylsäureestern 1 bis 8 C-Atome aufweisender einwertiger Alkohole, (b) Methacrylsäureestern mehrwertiger Alkohole und/oder aromatischen Polyvinylverbindungen, (c) ungesättigten Kohlenwasserstoffen, die mindestens 2 Allylgruppierungen im Molekül aufweisen und/oder Polyvinyläthern mehrwertiger Alkohole und gegebenenfalls (d) Styrol erhalten.

Durch die erfindungsgemässe gemeinsame Verwendung der 2 verschiedenen Vernetzungsmitteltypen [Komponenten (b) und (c)] wird eine entscheidende Verbesserung der Harzeigenschaften erreicht. Dies ist deshalb überraschend, da weder bei Verwendung von Komponente (b) noch bei der Verwendung von Komponente (c) als alleinige Vernetzer für Komponente (a) Harze mit befriedigenden Eigenschaften erhalten werden.

Als Styrole, deren Benzolkern durch $C_1$-$C_4$-Alkylgruppen, Halogenatome und/oder Nitrogruppen und/oder dessen Seitenkette durch $C_1$-$C_4$-Alkylgruppen substituiert ist, seien beispielsweise genannt: Chlorstyrol, Dichlorstyrol, Vinyltoluol, Chlor-vinyltoluol, Nitrostyrol, Nitrovinyltoluol, α-Methylstyrol, α-Methylvinyltoluol und α-Methylchlorstyrol.

Als Methacrylsäureester werden die Ester der Methacrylsäure mit 1 bis 8 C-Atome aufweisenden Alkoholen wie Methanol, Äthanol, Propanol, n-Butanol, sec.-Butanol, Pentanol, iso-Pentanol, n-Hexanol und 2-Äthylhexanol eingesetzt. Vorzugsweise wird Methacrylsäuremethylester verwendet.

Es können auch Gemische aus substituierten Styrolen und den vorgenannten Methacrylsäureestern eingesetzt werden. Das Mengenverhältnis Styrole zu Methacrylsäureestern in diesen Gemischen richtet sich nach der für das Mischpolymerisat gewünschten Dichte.

Es hat sich in manchen Fällen, z.B. zum Einstellen einer bestimmten Dichte des Polymerisats, als vorteilhaft erwiesen, zusätzlich zu den Monomeren (a), (b) und (c) noch bis zu 50

Gew.-%, bezogen auf das Gesamtgewicht der Monomeren, Styrol einzusetzen.

Als Vertreter der als Komponente (b) zu verwendenden Methacrylsäureester mehrwertiger Alkohole seien beispielsweise genannt: Glykoldimethacrylat, Diglykoldimethacrylat, Glycerintrimethacrylat. Vorzugsweise wird Glykoldimethacrylat verwendet.

Als Vertreter der als Komponenten (b) zu verwendenden aromatischen Polyvinylverbindungen seien beispielsweise genannt: o-, m- und p-Divinylbenzol, Divinyltoluol, Divinylnaphthalin, Trivinylbenzol. Vorzugsweise wird Divinylbenzol verwendet.

Als Vertreter der als Komponente (c) zu verwendenden mindestens 2 Allylgruppierungen im Molekül aufweisenden Verbindungen seien beispielsweise genannt: Hexadien-(1,5), 2-Methyl-hexadien-(1,5), 2,5-Dimethylhexadien-(1,5), Heptadien-(1,6), Octadien-(1,7), 1,2,4-Trivinylcyclohexan. Vorzugsweise werden Heptadien-(1,6) und Octadien-(1,7) verwendet.

Als Vertreter der als Komponente (c) zu verwendenden Polyvinyläther mehrwertiger Alkohole seien beispielsweise genannt: Glykoldivinyläther, Diäthylenglykoldivinyläther, Glycerintrivinyläther. Vorzugsweise wird Diethylenglykoldivinylether verwendet.

Die zur Herstellung der erfindungsgemässen Kunstharze anzuwendende Menge an Vernetzungsmittel, d.h. das Gesamtgewicht der Komponenten (b) und (c) hängt von der Art der Komponenten (a), der gegebenenfalls zugesetzten Styrolmenge und der Dichte, die das Kunstharz aufweisen soll, ab. Im allgemeinen hat es sich als vorteilhaft erwiesen, wenn das Gesamtgewicht der Komponenten (b) und (c) 0,5 bis 70 Gew.-%, vorzugsweise 1 bis 40 Gew.-%, bezogen auf das Gesamtgewicht der Komponenten (a), (b), (c) und gegebenenfalls (d) beträgt.

Innerhalb der erfindungsgemäss zu verwendenden Vernetzungsmittel-Kombination aus den Komponenten (b) und (c) kann das Mengenverhältnis der beiden Komponenten in weiten Grenzen schwanken. Im allgemeinen hat es sich bewährt, wenn das Gewicht der Komponenten (b) 2-95 Gew.-%, vorzugsweise 10-80 Gew.-%, bezogen auf das Gesamtgewicht der Komponenten (b) und (c), beträgt.

Zur Herstellung der erfindungsgemässen Kunstharze werden die Komponenten (a), (b), (c) und gegebenenfalls (d) in für Mischpolymerisationen üblicher Weise mischpolymerisiert. Die Mischpolymerisation wird vorzugsweise als Perlpolymerisation in wässriger Suspension vorgenommen. Die Polymerisation wird in bekannter Weise durch übliche Radikalbildner ausgelöst.

Die erfindungsgemässen Kunstharze können sowohl Gelstruktur als auch makroporöse Struktur aufweisen. Zur Herstellung makroporöser Kunstharze wird die Mischpolymerisation in bekannter Weise in Gegenwart organischer Flüssigkeiten (Porösmachern) vorgenommen (siehe z.B. Ullmanns Encyklopädie der technischen Chemie, 4. Auflage, 1977, Band 13, S. 296).

Beispiel 1 (Vergleichsharz)

Die Lösung von 900 g Methacrylsäuremethylester, 100 g technischem Divinylbenzol (Zusammensetzung: 62% Divinylbenzol, ~ 36% Äthylstyrole, ~ 2% Naphthalin + Diäthylbenzole) und 6 g Dibenzoylperoxid wird unter Rühren in 1,5 ℓ 0,2%iger wässriger Tylose®-Lösung suspendiert und unter 5stündigem Rühren bei 60°C und nachfolgendem zweistündigem Rühren bei 90°C perlpolymerisiert. Nach dem Erkalten werden die Perlen abgesaugt, mit Wasser gewaschen und getrocknet.

Ausbeute: 922 g (Harz B).

Beispiel 2

Die Lösung von 927 g Methacrylsäuremethylester, 33 g technischem Divinylbenzol, 40 g Octadien-(1,7) und 6 g Dibenzoylperoxid wird unter Rühren in 1,5 ℓ 0,2%iger wässriger Tylose-Lösung suspendiert und unter den in Beispiel 1 beschriebenen Bedingungen perlpolymerisiert.

Ausbeute: 984 g (Harz C).

Beispiel 3

Die Lösung aus 913 g Methacrylsäuremethylester, 67 g technischem Divinylbenzol, 20 g Octadien-(1,7) und 6 g Dibenzoylperoxid wird unter Rühren in 1,5 ℓ 0,2%iger wässriger Tylose-Lösung suspendiert und unter den in Beispiel 1 beschriebenen Bedingungen perlpolymerisiert.

Ausbeute an Perlpolymerisat: 944 g.

Beispiel 4

Die Lösung aus 921 g Methacrylsäuremethylester, 49 g technischem Divinylbenzol, 30 g 1,3,5-Trivinylcyclohexan und 6 g Dibenzoylperoxid wird unter Rühren in 1,5 ℓ 0,2%iger wässriger Tylose-Lösung suspendiert und unter den in Beispiel 1 beschriebenen Bedingungen perlpolymerisiert.

Ausbeute an Perlpolymerisat: 978 g.

Beispiel 5

Die Lösung aus 900 g Methacrylsäuremethylester, 33 g technischem Divinylbenzol, 60 g Octadien-(1,7) und 4 g Dibenzoylperoxid wird unter Rühren in 2 ℓ 0,2%iger wässriger Tylose-Lösung suspendiert und unter den in Beispiel 1 beschriebenen Bedingungen perlpolymerisiert.

Ausbeute an Perlpolymerisat: 976 g.

Beispiel 6

Die Lösung aus 920 g Methacrylsäuremethylester, 17 g technischem Divinylbenzol, 30 g Heptadien-(1,6) und 10 g Dibenzoylperoxid wird unter Rühren in 2 ℓ 1%iger Polyvinylalkohol-Lösung suspendiert und unter den in Beispiel 1 beschriebenen Bedingungen perlpolymerisiert.

Ausbeute an Perlpolymerisat: 967 g.

Beispiel 7

Die Lösung aus 800 g Methacrylsäuremethylester, 67 g technischem Divinylbenzol, 13,3 g Diethylenglykoldivinyläther und 8 g Dibenzoylperoxid wird unter Rühren in 1,5 ℓ 1%iger Polyvinylalkohol-Lösung suspendiert und unter den in Beispiel 1 beschriebenen Bedingungen perlpolymerisiert.

Ausbeute an Perlpolymerisat: 856 g.

**Beispiel 8**

Die Lösung aus 927 g Methacrylsäuremethylester, 33 g technischem Divinylbenzol, 40 g Octadien-(1,7) und 8 g Diazoisobuttersäurenitril wird unter Rühren in 2 ℓ 0,2%iger wässriger Tylose-Lösung suspendiert und unter den in Beispiel 1 beschriebenen Bedingungen perlpolymerisiert.

Ausbeute an Perlpolymerisat: 940 g.

**Beispiel 9**

Die Lösung aus 500 g p-Chlorstyrol, 400 g Styrol, 33 g technischem Divinylbenzol, 67 g Heptadien-(1,6) und 7 g Dibenzoylperoxid wird unter Rühren in 1,2 ℓ 0,2%iger wässriger Tylose-Lösung suspendiert und unter den in Beispiel 1 beschriebenen Bedingungen perlpolymerisiert.

Ausbeute an Perlpolymerisat: 980 g.

**Beispiel 10**

Die Lösung aus 890 g Methacrylsäuremethylester, 80 g technischem Divinylbenzol, 30 g Octadien-(1,7), 100 g Isododekan und 8 g Dibenzoylperoxid wird unter Rühren in 1,5 ℓ 0,2%iger wässriger Tylose-Lösung suspendiert und unter den in Beispiel 1 beschriebenen Bedingungen perlpolymerisiert.

Ausbeute aus Perlpolymerisat: 975 g.

**Beispiel 11**

Die Lösung aus 928 g Methacrylsäuremethylester, 32 g technischem Divinylbenzol, 40 g Diethylenglykoldivinylether und 8 g Dibenzoylperoxid wird unter Rühren in 1,5 ℓ 0,2%iger wässriger Tylose-Lösung suspendiert und unter den in Beispiel 1 beschriebenen Bedingungen perlpolymerisiert.

Ausbeute an Perlpolymerisat: 940 g.

**Beispiel 12**

Die Lösung aus 232 g Styrol, 696 g Methacrylsäuremethylester, 32 g technischem Divinylbenzol, 40 g Octadien-(1,7) und 8 g Dibenzoylperoxid wird unter Rühren in 1,8 ℓ 0,2%iger wässriger Tylose-Lösung suspendiert und unter den in Beispiel 1 beschriebenen Bedingungen perlpolymerisiert.

Ausbeute an Perlpolymerisat: 941 g.

**Beispiel 13**

Die Lösung aus 935 g Methacrylsäuremethylester, 55 g Ethylenglykoldimethacrylat, 10 g Octadien-(1,7) und 6 g Dibenzoylperoxid wird unter Rühren in 1,5 ℓ 0,2%iger wässriger Tylose-Lösung suspendiert und unter den in Beispiel 1 beschriebenen Bedingungen perlpolymerisiert.

Ausbeute an Perlpolymerisat: 983 g.

**Beispiel 14**

Die Lösung aus 993,8 g Methacrylsäuremethylester, 3,2 g technischem Divinylbenzol, 3 g Octadien-(1,7) und 8 g Dibenzoylperoxid wird unter Rühren in 1,5 ℓ 0,2%iger wässriger Thylose-Lösung suspendiert und unter den in Beispiel 1 beschriebenen Bedingungen perlpolymerisiert.

Ausbeute an Perlpolymerisat: 866 g.

**Beispiel 15**

In eine mit einem unteren Düsenboden und einem Drainagesystem im unteren Drittel versehenen Ionenaustauscher-Säule werden eingefüllt: 10 ℓ stark saurer Kationenaustauscher (H-Form; Korngrösse > 0,7 mm), 10 ℓ stark basischer Anionenaustauscher, Typ 1, (OH-Form; Korngrösse 0,3 - 0,8 mm) und 2,5 ℓ Perlmerisat gemäss Beispiel 2 (Korngrösse 0,5 - 0,6 mm). Nach dem Rückspülen mit Wasser mit einer Geschwindigkeit von 6 m/h beobachtet man eine vollständige Trennung der drei Komponenten. Das Drainagesystem befindet sich dann vollständig in der Inertschicht.

Beispiel zur Erläuterung der unterschiedlichen Beständigkeit herkömmlicher, als Trennschichten verwendeter Kunstharze und der erfindungsgemässen Kunstharze.

Zur Kennzeichnung der Beständigkeit der verschiedenen Harze wurden

1. der unterschiedliche chemische Sauerstoffbedarf (CSB) der mit den verschiedenen Kunstharzen behandelten Wasser bestimmt;
2. die schwach saure Austauschkapazität der Harze vor und nach dem Behandeln mit verdünnter Natronlauge und verdünnter Schwefelsäure und das Auswaschverhalten der Harze nach Beaufschlagung mit 4%iger Natronlauge bestimmt.

Zur Bestimmung des CSB-Wertes wurden 150 ml Kunstharz mit 300 ml deionisiertem Wasser 8 Tage bei 20°C aufbewahrt. Nach dem Abtrennen des Wassers wurde in diesem der Gehalt an oxidierbaren Stoffen bestimmt. Die erhaltenen Werte sind in Tabelle 1 zusammengestellt.

Tabelle 1

CSB-Wert
Harz A (herkömmliches Trennharz
        auf Basis Acrylnitril-
        Butadien-Styrol)        588 mg $O_2$/l Harz
Harz B (nach Beispiel 1)        44 mg $O_2$/l Harz
Harz C (nach Beispiel 2)        <5 mg $O_2$/l Harz
                           (Nachweisgrenze 5 mg $O_2$/l Harz)

Zur Bestimmung der schwach sauren Austauschkapazität wurden 150 ml Kunstharz mit 300 ml 4%iger Natronlauge bzw. 300 ml 10%iger Schwefelsäure 8 Tage auf 80°C erhitzt. Danach wurden die Harze mit deionosiertem Wasser neutral gewaschen. Die erhaltenen Werte sind in Tabelle 2 zusammengestellt.

Tabelle 2

Schwach saure austauschaktive Gruppen

Harz A a)    <0,5 mmol einwertige Ionen/l Harz
      b)    58    mmol einwertige Ionen/l Harz
      c)    12    mmol einwertige Ionen/l Harz

Harz B a)    <0,5 mmol einwertige Ionen/l Harz
      b)    36    mmol einwertige Ionen/l Harz
      c)    10    mmol einwertige Ionen/l Harz

Harz C a)    <0,5 mmol einwertige Ionen/l Harz
      b)    <0,5 mmol einwertige Ionen/l Harz
      c)    <0,5 mmol einwertige Ionen/l Harz

(Nachweisgrenze 0,5 mmol einwertige Ionen/l Harz)

a)    bezeichnet das unbehandelte Trennharz;
b)    bezeichnet das 8 Tage bei 80°C mit 4%iger Natronlauge behandelte Trennharz;
c)    bezeichnet das 8 Tage bei 80°C mit 10%iger Schwefelsäure behandelte Trennharz.

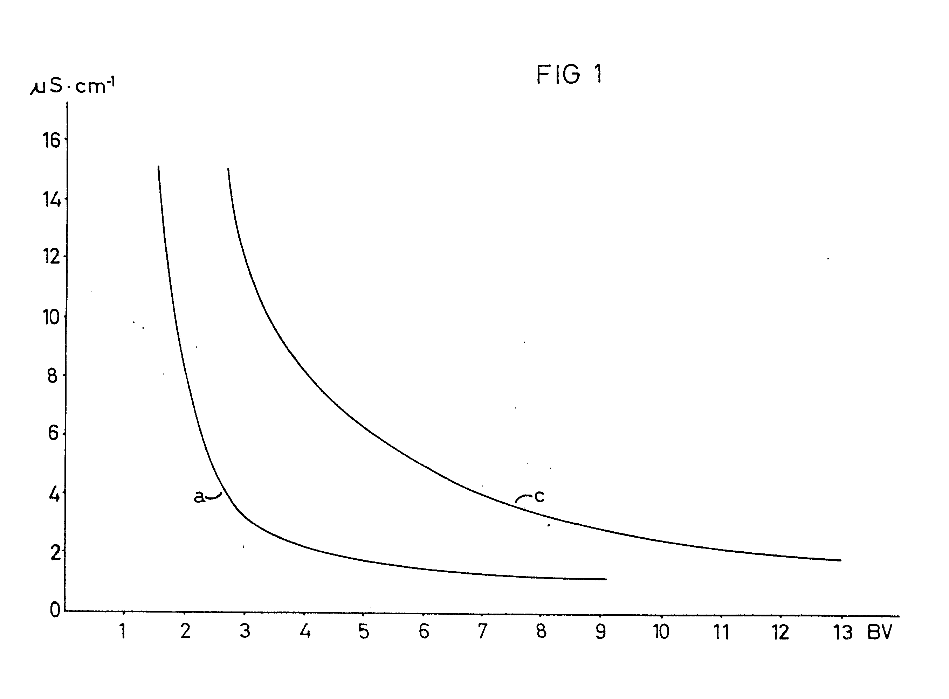

Zur Bestimmung des Auswaschverhaltens wurden je 150 ml Harz A, B und C und zwar in unbehandelter Form (a), in durch 8tägiges Erwärmen auf 80°C mit 4%iger Natronlauge vorbehandelter Form (b) und in durch 8tägiges Erwärmen auf 80°C mit 10%iger Schwefelsäure vorbehandelter Form (c) in eine Säule gefüllt und mit 4%iger Natronlauge beaufschlagt. Anschliessend wurde mit deionisiertem Wasser gewaschen und im Eluat die Leitfähigkeit bestimmt. In den Figuren 1, 2 und 3 sind die in den Eluaten gemessenen Leitfähigkeitswerte in Abhängigkeit von der Eluatmenge, d.h. der zum Waschen verwendeten Wassermenge, aufgetragen. Die Eluat-(Waschwasser)-Menge ist in Bettvolumina (BV) angegeben.

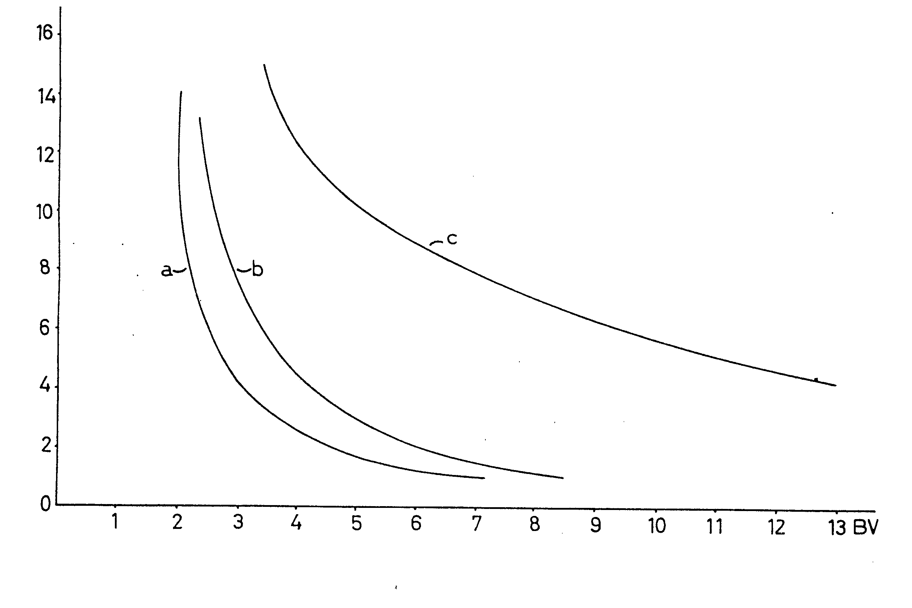

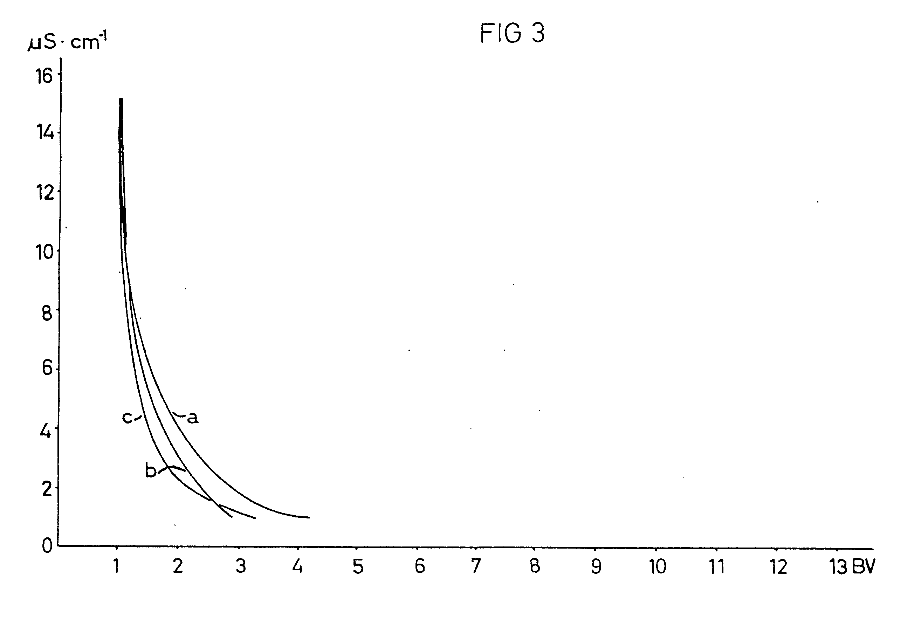

Figur 1 zeigt das Auswaschverhalten des Harzes A [A(a), A(c); das Auswaschverhalten des Harzes A(b) konnte nicht in Figur 1 eingetragen werden, weil sogar nach 15 Bettvolumina Waschwasser die Leitfähigkeit noch 59 µS.cm⁻¹ beträgt]. Figur 2 das Auswaschverhalten des Harzes B [B(a), B(b), B(c)] und Figur 3 das Auswaschverhalten des Harzes C [C(a), C(b), C(c)].

**Patentansprüche**

1. Kunstharze auf Basis vernetzter Mischpolymerisate aus Mono- und Polyvinylverbindungen erhalten durch Mischpolymerisation von
(a) Styrolen, deren Benzolkern durch C₁-C₄-Alkylgruppen, Halogenatome und/oder Nitrogruppen und/oder deren Seitenkette durch C₁-C₄-Alkylgruppen substituiert ist; und/oder Methacrylsäureestern 1 bis 8 C-Atome aufweisender einwertiger Alkohole,
(b) Methacrylsäureestern mehrwertiger Alkohole und/oder aromatischer Polyvinylverbindungen und

(c) ungesättigten Kohlenwasserstoffen, die mindestens zwei Allylgruppierungen im Molekül aufweisen und/oder Polyvinylethern mehrwertiger Alkohole und gegebenenfalls
(d) Styrol.
2. Kunstharze gemäss Anspruch 1, dadurch gekennzeichnet, dass als Komponente (a) Methacrylsäure-C₁-C₈-alkylester, als Komponente (b) Glykoldimethacrylat oder Divinylbenzol und als Komponente (c) Heptadien-(1,6), Octadien-(1,7) oder Diethylenglykoldivinylether eingesetzt werden.
3. Kunstharze gemäss Anspruch 1 und 2, dadurch gekennzeichnet, dass das Gesamtgewicht der Komponenten (b) und (c) 0,5 bis 70 Gew.-%, bezogen auf das Gesamtgewicht der Komponenten (a), (b), (c) und gegebenenfalls (d) beträgt.
4. Kunstharze gemäss Anspruch 1 bis 3, dadurch gekennzeichnet, dass das Gesamtgewicht der Komponenten (b) und (c) 1 bis 40 Gew.-%, bezogen auf das Gesamtgewicht der Komponenten (a), (b), (c) und gegebenenfalls (d) beträgt.
5. Verfahren zur Herstellung von Kunstharzen gemäss Ansprüchen 1 bis 4, auf Basis vernetzter Mischpolymerisate aus Mono- und Polyvinylverbindungen durch Mischpolymerisation der Monomeren in Gegenwart von Radikalbildnern, dadurch gekennzeichnet, dass man als Monomere
(a) Styrole, deren Benzolkern durch C₁-C₄-Alkylgruppen, Halogenatome und/oder Nitrogruppen und/oder deren Seitenkette durch C₁-C₄-Alkylgruppen substituiert ist; und/oder Methacrylsäureester 1 bis 8 C-Atome aufweisender einwertiger Alkohole,
(b) Methacrylsäureester mehrwertiger Alkohole und/oder aromatische Polyvinylverbindungen und
(c) ungesättigte Kohlenwasserstoffe, die mindestens zwei Allylgruppierungen im Molekül aufweisen und/oder Polyvinylether mehrwertiger Alkohole und gegebenenfalls
(d) Styrol
verwendet.
6. Verwendung der Kunstharze gemäss Anspruch 1 bis 4 als Inertmaterial für Trennschichten in Ionenaustauscher-Mischbettfiltern.

**Claims**

1. Synthetic resins based on crosslinked copolymers of monovinyl and polyvinyl compounds, obtained by copolymerising
(a) styrenes, the benzene nucleus of which is substituted by C₁-C₄-alkyl groups, halogen atoms and/or nitro groups and/or the side chain of which is substituted by C₁-C₄-alkyl groups; and/or methacrylates of monohydric alcohols containing 1 to 8 carbon atoms,
(b) methacrylates of polyhydric alcohols and/or aromatic polyvinyl compounds and
(c) unsaturated hydrocarbons which have at least two allyl groupings in the molecule, and/or polyvinyl ethers of polyhydric alcohols, and optionally
(d) styrene.

2. Synthetic resins according to claim 1, characterised in that C₁-C₈-alkyl methacrylates are employed as component (a), glycol dimethacrylate or divinylbenzene is employed as component (b) and hepta-1,6-diene, octa-1,7-diene or diethylene glycol divinyl ether is employed as component (c).

3. Synthetic resins according to claims 1 and 2, characterised in that the total weight of components (b) and (c) is 0.5 to 70% by weight, relative to the total weight of components (a), (b), (c) and, if appropriate, (d).

4. Synthetic resins according to claims 1 to 3, characterised in that the total weight of components (b) and (c) is 1 to 40% by weight, relative to the total weight of components (a), (b), (c) and, if appropriate, (d).

5. Process for the preparation of synthetic resins according to claims 1 to 4 based on crosslinked copolymers of monovinyl and polyvinyl compounds by copolymerisation of the monomeres in the presence of free radical-forming agents, characterised in that the monomers used are

(a) styrenes, the benzene nucleus of which is substituted by C₁-C₄-alkyl groups, halogen atoms and/or nitro groups and/or the side chain of which is substituted by C₁-C₄-alkyl groups; and/or methacrylates of monohydric alcohols containing 1 to 8 carbon atoms,

(b) methacrylates of polyhydric alcohols and/or aromatic polyvinyl compounds and

(c) unsaturated hydrocarbons which have at least two allyl groupings in the molecule, and/or polyvinyl ethers of polyhydric alcohols, and optionally

(d) styrene.

6. Use of the synthetic resins according to claims 1 to 4 as an inert material for separation layers in ion exchanger mixed bed filters.

**Revendications**

1. Résines synthétiques à base de copolymères réticulés de composés mono- et polyvinyliques, obtenues par copolymérisation

(a) de styrènes dont le noyau benzénique est substitué par des groupes alkyle en C₁-C₄, des atomes d'halogène et/ou des groupes nitro et/ou dont la chaîne latérale est substituée par des groupes alkyle en C₁-C₄; et/ou d'esters d'acide méthacrylique, d'alcools monovalents en C₁-C₈,

(b) d'esters d'acide méthacrylique d'alcools polyvalents et/ou de composés polyvinyliques aromatiques,

(c) d'hydrocarbures insaturés présentant au moins deux groupes allyle dans leur molécule et/ou d'éthers polyvinyliques d'alcools polyvalents et, éventuellement,

(d) de styrène.

2. Résines synthétiques selon la revendication 1, caractérisées en ce qu'on utilise comme composant (a) des esters d'alkyle en C₁-C₈ d'acide méthacrylique, comme composant (b) le diméthacrylate de glycol ou le divinylbenzène et comme composant (c) l'heptadiène-(1,6), l'octadiène-(1,7) ou l'éther divinylique de diéthylèneglycol.

3. Résines synthétiques selon les revendications 1 et 2, caractérisées en ce que le poids total des composants (b) et (c) est de 0,5 à 70% en poids par rapport au poids total des composants (a), (b), (c) et éventuellement (d).

4. Résines synthétiques selon les revendications 1 à 3, caractérisées en ce que le poids total des composants (b) et (c) est de 1 à 40% en poids par rapport au poids total des composants (a), (b), (c) et éventuellement (d).

5. Procédé pour la préparation de résines synthétiques selon les revendications 1 à 4, à base de copolymère réticulé de composés mono- et polyvinyliques, par copolymérisation des monomères en présence de générateurs des radicaux, caractérisé en ce que l'on utilise comme monomères

(a) des styrènes dont le noyau benzénique est substitué par des groupes alkyle en C₁-C₄ des atomes d'halogène et/ou des groupes nitro et/ou dont la chaîne latérale est substituée par des groupes alkyle en C₁-C₄ et/ou des esters d'acide méthacrilique d'alcools monovalents en C₁-C₈,

(b) des esters d'acide méthacrylique d'alcools polyvalents et/ou des composés polyvinyliques aromatiques et

(c) des hydrocarbures insaturés qui contiennent, dans leur molécule, au moins deux groupes allyle et/ou des éthers polyvinyliques d'alcools polyvalents et, éventuellement,

(d) du styrène.

6. Utilisation des résines synthétiques selon les revendications 1 à 4 comme matériau inerte pour les couches de séparation dans les filtres à lit mixte pour échangeurs d'ions.

FIG 1

FIG 3

$\mu S \cdot cm^{-1}$